# EUROPEAN PATENT SPECIFICATION

(11) **EP 3 948 643 B1**
(45) Date of publication and mention of the grant of the patent: **22.06.2022**
(21) Application number: 20717560.5
(22) Date of filing: 25.03.2020
(51) Int. Cl.: G06K 7/00, G06K 17/00, G06K 7/10

(54) **METHOD, SYSTEM AND DEVICE FOR MONITORING AND LABELLING BIOLOGICAL AND PHARMACEUTICAL PRODUCTS**
VERFAHREN, SYSTEM UND VORRICHTUNG ZUR ÜBERWACHUNG UND MARKIERUNG VON BIOLOGISCHEN UND PHARMAZEUTISCHEN PRODUKTEN
PROCÉDÉ, SYSTÈME ET DISPOSITIF DE SURVEILLANCE ET D'ÉTIQUETAGE DE PRODUITS BIOLOGIQUES ET PHARMACEUTIQUES

(30) Priority: 02.04.2019 EP 19382240
(43) Date of publication of application: 09.02.2022
(73) Proprietor: AT-Biotech Traceability Information Systems, SL, 28009 Madrid (ES)
(72) Inventor: AGEA MERINO, Aida, 28014 Madrid (ES); MENA, Antoni, 43206 Reus (ES)
(74) Representative: Segui Quetglas, Margalida
(86) International application number: PCT/EP2020/058424
(87) International publication number: WO 2020/200975

(56) References cited:
- US-A1- 2007 188 306
- US-A1- 2013 221 099
- US-B1- 6 371 375
- US-B1- 6 830 181

## Description

### Technical field

The invention generally relates to management and label systems and methods. In particular, the invention relates to a method, system and device for monitoring and labelling biological and pharmaceutical products.

### Background of the Invention

Biological materials, medicines and pharmaceutical products used in healthcare require to be clearly identified and traceable from their origin (manufacturer or biological donor) until their final destination or use, in order to avoid medical or health hazards due to incompatibility of a patient with certain drugs or a biological specimen from a donor, as well as to be able to trace a product if a problem has been detected or else it has been mislaid.

That usually implies that every element must be controlled univocally, so it is usually enclosed in plastic bags, bottles or other many kinds of containers depending on its physical properties, nature and storage needs. To identify univocally every element, an identification label is usually linked to it.

The industry uses labels that can combine descriptive and detailed text or data mixed with one or more barcodes (or other data matrix) as identifiers and/or descriptors. The barcodes can be read one by one with electronic readers that need to be placed very close to the label.

However, the process of reading said labels is not always reliable and/or efficient in certain situations, such as: when the label is wet or frozen, when the label has deteriorated or when the label has been mislaid, which means that the biological or pharmaceutical product cannot be properly identified until a manual action or corrective measure has been performed.

In order to avoid said issues, the use of Radio-frequency identification (RFID) tags has increased substantially. RFID tags are electronic sensors with an identification number that can store additional information in its internal memory. Furthermore, RFID tags can be read at a variable distance using wireless radio frequency communication networks, which means that reading one or more RFID tags can be done without manual handling, and therefore they are increasingly used to increase productivity in manufacturing and distribution industries.

In general, the RFID tag is placed redundantly with a physical readable data matrix label, such as a barcode, wherein both elements store, at least, part of the same information, so that a product can still be monitored and/or traced in the event of one of the labels being damaged.

There are known some patents and patent application in the field.

For example, US 7158030-B2 discloses a medication tracking and/or medical assistance device and method comprising an RFID tag coder for reading from and/or writing to an RFID tag. A processor and a memory process information read from an RFID tag to provide a message based thereon by a visual and/or an audible message.

US 20060032923-A1 provides a system for dispensing pharmaceuticals or other material dispensed in prepackaged containers. The container includes a symbol such as a barcode to identify the contents of the container. The system uses a label having a first portion having an outer edge and a second portion that extends out from one side and above the top of the first portion. The second portion includes an indicium such as a barcode that is printed on the second portion that describes the desired contents of a container on which the label is intended. The symbol and the indicium are electronically read after the label is affixed to the container to determine if the label is on a container having the identified contents.

US 7114654-B2 discloses an RFID encoder that is used in conjunction with a barcode print. The RFID encoder utilizes information obtained from a data stream from a host computer, from a corresponding barcode label, or other source to program an RFID label. The programmed label can then be applied with an integrated applicator or an external applicator. The RFID encoder can also verify that an RFID tag or label has been properly encoded and has the same content as the corresponding barcode label. The RFID can further verify that the barcode has been properly printed. If both barcode and RFID tag contain the correct data, both types of labels are attached to a package, enabling the package to be read optically and with radio frequency signals.

US 6371375-B1 discloses a system for storing and retrieving data. The system comprises a memory device such as a radio frequency tag having a memory for storing the data, a first identifier stored in the memory of the memory device, and a machine-readable symbol associated with the memory device, where at least a portion of the machine-readable symbol encodes a second identifier logically associable with the first identifier. The machine-readable symbol may, for example, be printed on the memory device, or may be carried by a container that also carries the memory device. The data stored in the memory device may include data related to the container or items carried by the container. The system of this patent is not intended for the monitoring and labelling of medical or pharmaceutical products. Likewise, this patent neither performs a comparison of the information included in the machine-readable symbol and in the RFID tag, to check if they coincide.

US 6830181-B1 provides a system and method which utilize a dual function reader device, which may be a hand-held inventory control device, which first performs an optical read of an optical bar code on a carrier unit, then based on the identification or other information obtained from the optical read a RF read is made of a RF tag attached to, or within, the carrier unit. An indicator light on the carrier unit illuminates when the optical read is completed, which allows an operator to visually verify that the optical read has transpired for the desired carrier unit. The RF tag provides data regarding the inventory of the goods stored within, or on, the carrier unit, the temperature of the goods, the shelf-life of the goods, the source and/or destination of the carrier unit and/or the goods, or other information. Data can also be written to the RF tag by the reader. This patent does not perform a comparison of the information included in the optical bar code and in the RFID tag, to check if they coincide. Accordingly, there is a need for new methods, systems and devices for monitoring and labelling biological and pharmaceutical products.

### Description of the Invention

To that end, present invention provides according to an aspect a method for monitoring and labelling biological and pharmaceutical products, according to claim 1. The method comprises reading (at least one) optical tag attached to a biological or pharmaceutical product via a device including an optical reader (e.g. a camera) with computer vision capabilities (e.g. a computer vision software/program), the optical tag including information that define/describe the biological or pharmaceutical product; and reading a RFID tag attached to the biological or pharmaceutical product via a RFID reader, the RFID tag storing in a memory thereof at least one unique identifier or at least one unique identifier and information of the biological or pharmaceutical product.

The method also comprises: comparing, by a processor, the information read from the optical and RFID tags; determining that the compared information, totally or partially, coincides or not based on a result of the comparison; emitting a first indication signal if the information coincides or a second indication signal if the information does not coincide; and determining, by the processor, whether additional information included in the optical tag has to be added to the memory of the RFID tag.

In the cited comparison step, the processor can determine whether all or only part of the information included in the optical tag should be compared with the information read from the RFID tag.

In some embodiments, the method can also record the information read from both tags in an external memory or database.

Also, in some embodiments, the processor can compare the information of the RFID tag with information stored in a memory of a computing system and determine if the information stored in the memory of the computing system has to be added to the memory of the RFID tag based on a result of said comparison.

The information included in the optical tag and the RFID tag can comprise one or more of the following: patient name, blood type, medical history, product information, dosage, traceability data, prescription, product control data, or a combination thereof, among others.

The optical tag can be a barcode, a data matrix, an image or a pictogram, among others.

In an embodiment, in particular when the determining step has established that additional information has to be added to the memory of the RFID tag, the additional information can be directly included into said memory or alternatively the additional information can modify or overwrite previously stored information in the memory of the RFID tag.

In an embodiment, the readings of the tags are performed simultaneously during labeling of the biological or pharmaceutical product. Likewise, the reading of the optical tag and of the RFID tag can be simultaneously performed.

The first and second indication signals can be optical and/or acoustic signals. Particularly, the two signals are different, thus it is easier for a user to recognize if the information matches or not.

According to another aspect, present invention also provides a system for monitoring and labelling biological and pharmaceutical products, according to claim 6. The proposed system comprises a device that includes an optical reader such as a camera with computer vision capabilities and a RFID reader, and a computing system operatively connected to the device and including a memory and at least one processor.

According to the proposed system, the device is configured to read an optical tag attached to a biological or pharmaceutical product via the optical reader, the optical tag including information that defines the biological or pharmaceutical product. The device is also configured to read a RFID tag attached to the biological or pharmaceutical product via the RFID reader, the RFID tag storing in a memory thereof at least one unique identifier or at least one unique identifier and information of the biological and pharmaceutical product.

The processor(s) can be configured to execute/apply one or more algorithms to determine whether all of the information or only part of the information included in the optical tag must be compared with the information included in the RFID tag. Moreover, the processor(s) determine that the compared information (totally or partially) coincides or not based on a result of the comparison, and emit a first indication signal if the information coincides or a second indication signal if the information does not coincide. Besides, the processor(s) determine whether additional information included in the optical tag has to be added to the memory of the RFID tag.

In yet another aspect, present invention also provides a device for monitoring and labelling biological and pharmaceutical products, according to claim 9. The proposed device has an optical reader with computer vision capabilities adapted to read an optical tag attached to a biological or pharmaceutical product, the optical tag including information about said biological or pharmaceutical product; a RFID reader adapted to read a RFID tag attached to said biological or pharmaceutical product, the RFID tag storing in a memory thereof at least one unique identifier or at least one unique identifier and information of the biological and pharmaceutical product; and a processing unit adapted to execute/apply one or more algorithms to: compare the information read from the tags; determine that the compared information, totally or partially, coincides or not based on a result of the comparison; emit a first indication signal if the information coincides or a second indication signal if the information does not coincide; and determine whether additional information included in the optical tag has to be added to the memory of the RFID tag.

In a particular embodiment, the device also has a counter support to hold the biological or pharmaceutical product. Moreover, the device may also have a motion sensor to detect when the biological or pharmaceutical product is placed on said counter support, so the monitoring process can start autonomously and automatically upon said detection is made.

Thus, the present invention provides a new technology/architecture for automating the monitoring of biological and pharmaceutical products during their transport by means of labelling said products (blood components, muscle tissues, organs, medicines, drugs, etc.) with RFID tags and a multi-barcode or other equivalent readable data matrix label.

Furthermore, the present invention is capable of reading a multi-barcode or data matrix label (i.e. an optical tag) attached to a product and to record that information read in a RFID tag, and of verifying that the information in the multi-barcode or data matrix label is already stored, at least in part, in the RFID tag (to be used as a redundancy checkpoint).

Other features of the invention appear from the following detailed description of the invention.

### Brief description of the Drawings

The foregoing and other advantages and features will be more fully understood from the following detailed description of the invention with reference to the accompanying drawings, to be taken in an illustrative and not limitative, in which:
Fig. 1 is a flow chart illustrating an embodiment of a method for monitoring and labelling biological and pharmaceutical products.
Fig. 2 is a flow chart illustrating another embodiment of a method for monitoring and labelling biological and pharmaceutical products.

### Detailed Description of the Invention

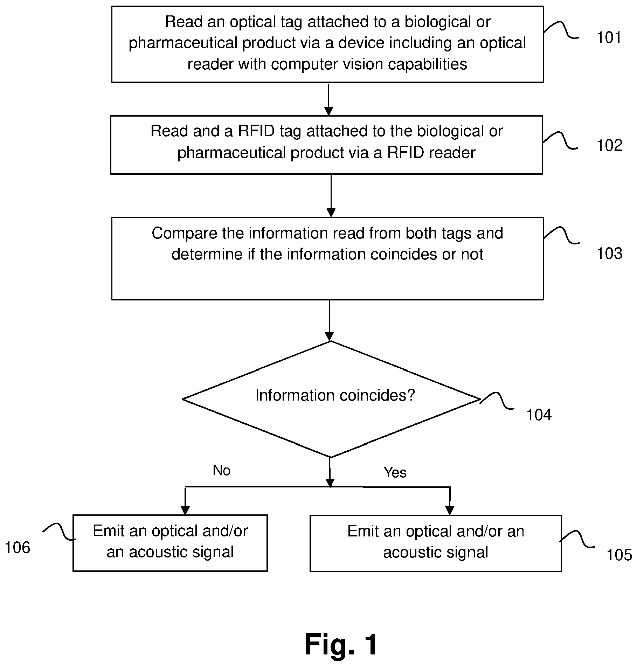

With reference to Fig. 1 therein it is illustrated a first embodiment of the proposed method. According to this embodiment, at step 101, an optical tag (e.g. a barcode, a data matrix, an image, a pictogram, etc.) attached to a biological or pharmaceutical product such as blood components, muscle tissues, organs, medicines, drugs, etc. is read via a device including an optical reader with computer vision capabilities. At step 102, a RFID tag attached to the biological or pharmaceutical product is read via a RFID reader.

The optical tag includes/stores information about or that defines the biological or pharmaceutical product. Likewise, the RFID tag has associated thereto a unique identifier and can include/store in a memory thereof information or data about the product. For example, the information can comprise a patient name, blood type, medical history, product information, dosage, traceability data, prescription, product control data, etc.

At step 103, the information read from both tags is compared by a processor. In this case, an algorithm or software particularly determines whether all or only part of the information included in the optical tag must be compared with the information included in the RFID tag. The result of the comparison determines if the compared information coincides or not. If the information coincides, a first optical and/or acoustic signal (step 105) is emitted. On the contrary, if the information does not coincide, a second optical and/or acoustic signal (step 106), particularly different to the first indication signal, is emitted. For example, LEDS and/or a code of colors can be used to indicate the coincidence or not coincidence of the compared information. An audible alarm could be equally used.

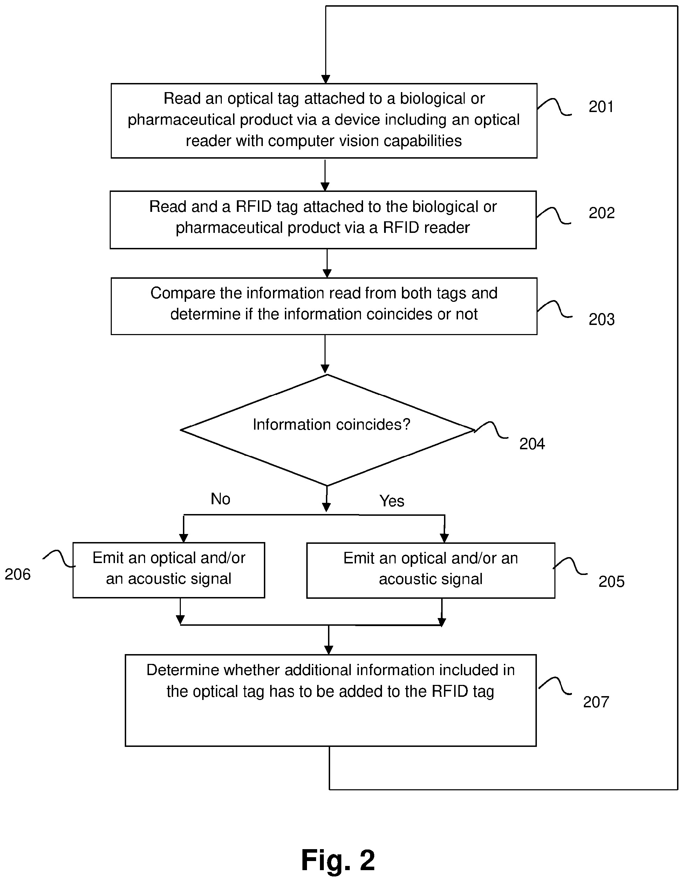

With reference to Fig. 2 therein it is illustrated a second embodiment of the proposed method. In this case, different to the first embodiment, an algorithm or software implemented/executed in a processor further determines, step 207, whether additional information included in the optical tag has to be added to the RFID tag. In this embodiment, it is possible to perform stages 205/206 and 207 in reverse order. That is, first it can be decided that additional information has to be added to the RFID tag and then the indication showing that the compared information coincides or not be emitted.

It should be noted that both embodiments described above could be complementary to each other. That is, the proposed method can perform the different steps indicated in each of the above described embodiments.

It should be also noted that in some embodiments the RFID tag can only have stored in its memory a unique identifier. Consequently, in this case, the comparison step will firstly determine that the compared information does not coincide. Later, the determining step can establish that additional information included in the optical tag has to be added to the memory of the RFID tag. So, when new readings of the tags are made, the processor will have to further check whether or not the information stored in both tags matches.

The cited processor can be included in a computing system (e.g. a PC, a cloud server, a smartphone, etc.) remote to the device and connected to the latter, either wirelessly or by cable, or can be included in the device itself. That is, in this latter case the device itself includes a processing unit to execute/perform the different method steps. In either case, a user interface can show the details of the different processes executed.

In any of the described embodiments, the reading of the optical tag and of the RFID tag can be performed simultaneously or one after the other.

The device (not shown in the figures) as indicated above includes an optical reader, for example a camera (digital or analogic having a digital converter), with computer vision capabilities, and a RFID reader. The optical reader is capable of capturing both text and barcodes (or data matrix) from the optical tag. The computer vision capabilities, for example implemented as computer vision software, allow the identification of the pixels in an image taken by the optical reader as barcodes or text and to perform a digital conversion of that data. The RFID reader is able to read and write information on/from the RFID tag. The RFID particularly operates under the ITU RFID standard and range of frequencies.

Particularly, the device also includes a counter support (e.g. a flat surface) to hold the labelled biological or pharmaceutical product. The device can also has an arm to hold the optical reader at a distance from the counter support, in a perpendicular position from the surface of the counter from which the whole surface (or a part of it) can be captured. Optionally, the counter support may have a line of LED lights to show the extension of the surface that is inside the optical reader focus.

The device may also include a motion sensor to detect when the product has been placed in the counter support, so the different cited processes start autonomously and automatically. The communication between the RFID reader and motion sensor is particularly wireless.

The device includes also a power supply unit or batteries for power feeding thereof and may also include other networking components such as cables, software, wireless router, etc. that allow the device to communicate with the remote computing system, sending and receiving information or a sequence of commands.

The cited user interface, which can be included in the remote computing system or in the device itself, provides a configuration panel allowing a user to apply the following restrictions:
i. *Selection of information:* the user can decide to write or validate part of the information in the optical tag (i.e. just one barcode out of several, the information placed in the upper corner of the optical tag, etc.).
ii. *Writing:* the user can transform and code some information in the optical tag or simply add new information in the memory of the RFID tag (i.e. if the word "infected" is written with words on the optical tag, a bit in a certain position of the memory of the RFID tag is set to "1").
iii. *Field Selection (in the RFID tag):* the user can decide if the operation (validation or writing) is to be applied on the total extension of the memory or to some positions. In the case of writing, the new information can optionally overwrite previous existing information stored in the selected part of the memory or the memory can be totally erased before writing.

The above-described embodiments of the present invention are merely meant to be illustrative and not limiting. It will thus be obvious to those skilled in the art that various changes and modifications may be made without departing from the scope of the claims.

## Claims

1. A method for monitoring and labelling biological and pharmaceutical products, the method comprising:
reading at least one optical tag attached to a biological or pharmaceutical product via a device including an optical reader with computer vision capabilities, the at least one optical tag including information about the biological or pharmaceutical product;
reading a RFID tag attached to the biological or pharmaceutical product via a RFID reader of the device, the RFID tag storing in a memory thereof at least one unique identifier or at least one unique identifier and information of the biological or pharmaceutical product;
wherein the information included in the optical tag and the RFID tag comprises one or more of: patient name, blood type, medical history, product information, dosage, traceability data, prescription, product control data, or a combination thereof, and
wherein the reading of the at least one optical tag and of the RFID tag is performed simultaneously;
comparing, by a processor, the information read from the optical and RFID tags;
determining that the compared information, totally or partially, coincides or not based on a result of the comparison;
emitting a first indication signal if the information coincides or a second indication signal if the information does not coincide, the second indication signal being different to the first indication signal; and
determining, by the processor, whether additional information included in the optical tag has to be added to the memory of the RFID tag.

2. The method of claim 1, further comprising:
comparing, by the processor, the information of the RFID tag with information stored in a memory of a computing system; and
determining if the information stored in the memory of the computing system has to be added to the memory of the RFID tag based on a result of said comparison.

3. The method of any one of the previous claims, wherein the method is implemented simultaneously during labeling of the biological or pharmaceutical product.

4. The method of any one of the previous claims, wherein the optical tag comprises a barcode, a data matrix or a pictogram.

5. The method of claim 1, wherein the first indication signal is an optical and/or an acoustic signal and the second indication signal is an optical and/or an acoustic signal.

6. A system for monitoring and labelling biological and pharmaceutical products, comprising:
- a device including an optical reader with computer vision capabilities and a RFID reader, said device being configured to:
read at least one optical tag attached to a product via the optical reader; and
read a RFID tag attached to the product via the RFID reader, the RFID tag storing in a memory thereof at least one unique identifier;
**characterized in that**:
- the product is a biological or pharmaceutical product;
- the at least one optical tag includes information about the biological or pharmaceutical product, wherein the RFID tag besides the unique identifier can also include information of the biological and pharmaceutical product.
- the reading of the at least one optical tag and of the RFID tag is configured to be performed simultaneously;
- the information included in the optical tag and the RFID tag comprises one or more of: patient name, blood type, medical history, product information, dosage, traceability data, prescription, product control data, or a combination thereof; and
- a computing system operatively connected to the device, said computing system including a memory and at least one processor, wherein said processor is configured to:
compare the information read from the optical and RFID tags;
determine that the compared information, totally or partially, coincides or not based on a result of the comparison;
emit a first indication signal if the information coincides or a second indication signal if the information does not coincide, the second indication signal being different to the first indication signal; and
determine whether additional information included in the optical tag has to be added to the memory of the RFID tag.

7. The system of claim 6, wherein the device further comprises a counter support configured to hold the biological or pharmaceutical product and a motion sensor configured to detect when the biological or pharmaceutical product is placed on said counter support.

8. The system of claim 6, wherein the first indication signal is an optical and/or an acoustic signal and the second indication signal is an optical and/or an acoustic signal.

9. A device for monitoring and labelling biological and pharmaceutical products, comprising:
- an optical reader with computer vision capabilities configured to read at least one optical tag attached to a product;
- a RFID reader configured to read a RFID tag attached to said product, the RFID tag storing in a memory thereof at least one unique identifier; and
- a processing unit configured to compare the information read from the optical and RFID tags;
**characterized in that**:
- the product is a biological or pharmaceutical product;
- the at least one optical tag includes information about the biological or pharmaceutical product, wherein the RFID tag besides the unique identifier can also include information of the biological and pharmaceutical product
- the reading of the at least one optical tag and of the RFID tag is configured to be performed simultaneously;
- the information included in the optical tag and the RFID tag comprises one or more of: patient name, blood type, medical history, product information, dosage, traceability data, prescription, product control data, or a combination thereof;
- the processing unit is further configured to:
determine that the compared information, totally or partially, coincides or not based on a result of the comparison;
emit a first indication signal if the information coincides or a second indication signal if the information does not coincide, the second indication signal being different to the first indication signal; and
determine whether additional information included in the optical tag has to be added to the memory of the RFID tag.

10. The device of claim 9, further comprising a counter support configured to hold the biological or pharmaceutical product and a motion sensor configured to detect when the biological or pharmaceutical product is placed on said counter support.

11. The device of claim 9 or 10, wherein the first indication signal is an optical and/or an acoustic signal and the second indication signal is an optical and/or an acoustic signal.

## Patentansprüche

1. Verfahren zur Überwachung und Markierung von biologischen und pharmazeutischen Produkten, wobei das Verfahren Folgendes umfasst:
mindestens eines an einem biologischen oder pharmazeutischen Produkt angebrachten optischen Etiketts ablesen über eine Vorrichtung, die ein optisches Lesegerät mit Computer-Vision-Fähigkeiten umfasst, wobei das mindestens eine optische Etikett Informationen über das biologische oder pharmazeutische Produkt einschließt;
ablesen eines an dem biologischen oder pharmazeutischen Produkt angebrachten RFID-Etiketts über ein RFID-Lesegerät der Vorrichtung, wobei das RFID-Etikett in einem Speicher davon mindestens ein einzigartiges Kennzeichen oder mindestens ein einzigartiges Kennzeichen und Informationen über das biologische oder pharmazeutische Produkt speichert;
wobei die in dem optischen Etikett und dem RFID-Etikett enthaltenen Informationen eines oder mehrere von Folgendem umfassen: Patientenname, Blutgruppe, Krankengeschichte, Produktinformationen, Dosierung, Rückverfolgbarkeitsdaten, Verschreibung, Produktkontrolldaten oder eine Kombination davon, und
wobei das Ablesen des mindestens einen optischen Etiketts und des RFID-Etiketts gleichzeitig durchgeführt wird;
vergleichen der von den optischen und RFID-Etiketten abgelesenen Informationen durch einen Prozessor;
bestimmen, dass die verglichenen Informationen ganz oder teilweise übereinstimmen oder nicht, basierend auf einem Ergebnis des Vergleichs;
ausgeben eines ersten Anzeigesignals, wenn die Informationen übereinstimmen, oder eines zweiten Anzeigesignals, wenn die Informationen nicht übereinstimmen, wobei sich das zweite Anzeigesignal von dem ersten Anzeigesignal unterscheidet; und
bestimmen, durch den Prozessor, ob zusätzliche Informationen, die in dem optischen Etikett eingeschlossen sind, zu dem Speicher des RFID-Etiketts hinzugefügt werden müssen.

2. Verfahren gemäß Anspruch 1, welches ferner Folgendes umfasst:
vergleichen der Informationen des RFID-Etiketts mit Informationen, die in einem Speicher eines Rechnersystems gespeichert sind, durch den Prozessor; und
bestimmen, ob die im Speicher des Rechnersystems gespeicherten Informationen dem Speicher des RFID-Etiketts hinzugefügt werden müssen, basierend auf einem Ergebnis des Vergleichs.

3. Verfahren gemäß einem der vorhergehenden Ansprüche, wobei das Verfahren gleichzeitig während der Markierung des biologischen oder pharmazeutischen Produkts durchgeführt wird.

4. Verfahren gemäß einem der vorhergehenden Ansprüche, wobei das optische Etikett einen Strichcode, eine Datenmatrix oder ein Piktogramm umfasst.

5. Verfahren gemäß Anspruch 1, wobei das erste Anzeigesignal ein optisches und/oder ein akustisches Signal ist und das zweite Anzeigesignal ein optisches und/oder ein akustisches Signal ist.

6. System zur Überwachung und Markierung von biologischen und pharmazeutischen Produkten, Folgendes umfassend:
- eine Vorrichtung, die ein optisches Lesegerät mit Computer-Vision-Fähigkeiten und ein RFID-Lesegerät umfasst, wobei die Vorrichtung ausgebildet ist, um:
mindestens ein an einem Produkt angebrachtes optisches Etikett über das optische Lesegerät abzulesen; und
ein an dem Produkt angebrachtes RFID-Etikett über das RFID-Lesegerät abzulesen, wobei das RFID-Etikett in einem Speicher davon mindestens ein einzigartiges Kennzeichen speichert;
**dadurch gekennzeichnet, dass**:
- das Produkt ein biologisches oder pharmazeutisches Produkt ist;
- das mindestens eine optische Etikett Informationen über das biologische oder pharmazeutische Produkt einschließt, wobei das RFID-Etikett neben dem einzigartigen Kennzeichen auch Informationen über das biologische und pharmazeutische Produkt einschließen kann
- das Ablesen des mindestens einen optischen Etiketts und des RFID-Etiketts so ausgebildet ist, dass es gleichzeitig durchgeführt wird;
- die in dem optischen Etikett und dem RFID-Etikett enthaltenen Informationen eines oder mehrere von Folgendem umfassen: Patientenname, Blutgruppe, Krankengeschichte, Produktinformationen, Dosierung, Rückverfolgbarkeitsdaten, Verschreibung, Produktkontrolldaten oder eine Kombination davon; und
- ein Rechnersystem, das operativ mit der Vorrichtung verbunden ist, wobei das Rechnersystem einen Speicher und mindestens einen Prozessor einschließt, wobei der Prozessor ausgebildet ist, um:
die von den optischen und RFID-Etiketten abgelesenen Informationen zu vergleichen;
basierend auf einem Ergebnis des Vergleichs zu bestimmen, ob die verglichenen Informationen ganz oder teilweise übereinstimmen oder nicht;
ein erstes Anzeigesignal auszugeben, wenn die Informationen übereinstimmen, oder ein zweites Anzeigesignal, wenn die Informationen nicht übereinstimmen, wobei sich das zweite Anzeigesignal von dem ersten Anzeigesignal unterscheidet; und
bestimmen, ob zusätzliche Informationen, die in dem optischen Etikett eingeschlossen sind, zu dem Speicher des RFID-Etiketts hinzugefügt werden müssen.

7. System gemäß Anspruch 6, wobei die Vorrichtung ferner eine Gegenstütze, die so ausgebildet ist, dass sie das biologische oder pharmazeutische Produkt hält, und einen Bewegungssensor umfasst, der so ausgebildet ist, dass er erkennt, wenn das biologische oder pharmazeutische Produkt auf der Gegenstütze platziert ist.

8. System gemäß Anspruch 6, wobei das erste Anzeigesignal ein optisches und/oder ein akustisches Signal ist und das zweite Anzeigesignal ein optisches und/oder ein akustisches Signal ist.

9. Vorrichtung zur Überwachung und Markierung von biologischen und pharmazeutischen Produkten, Folgendes umfassend:
- ein optisches Lesegerät mit Computer-Vision-Fähigkeiten, das so ausgebildet ist, dass es mindestens ein optisches Etikett abliest, das an einem Produkt angebracht ist;
- ein RFID-Lesegerät, das so ausgebildet ist, dass er ein an dem Produkt angebrachtes RFID-Etikett abliest, wobei das RFID-Etikett in einem Speicher davon mindestens ein einzigartiges Kennzeichen speichert; und
- eine Verarbeitungseinheit, die dazu ausgebildet ist, die von den optischen und RFID-Etiketten abgelesenen Informationen zu vergleichen;
**dadurch gekennzeichnet, dass**:
- das Produkt ein biologisches oder pharmazeutisches Produkt ist;
- das mindestens eine optische Etikett Informationen über das biologische oder pharmazeutische Produkt einschließt, wobei das RFID-Etikett neben dem einzigartigen Kennzeichen auch Informationen über das biologische und pharmazeutische Produkt einschließen kann
- das Ablesen des mindestens einen optischen Etiketts und des RFID-Etiketts so ausgebildet ist, dass es gleichzeitig durchgeführt wird;
- die in dem optischen Etikett und dem RFID-Etikett enthaltenen Informationen eines oder mehrere von Folgendem umfassen: Patientenname, Blutgruppe, Krankengeschichte, Produktinformationen, Dosierung, Rückverfolgbarkeitsdaten, Verschreibung, Produktkontrolldaten oder eine Kombination davon;
- die Verarbeitungseinheit ferner ausgebildet ist, um:
basierend auf einem Ergebnis des Vergleichs zu bestimmen, ob die verglichenen Informationen ganz oder teilweise übereinstimmen oder nicht;
ein erstes Anzeigesignal auszugeben, wenn die Informationen übereinstimmen, oder ein zweites Anzeigesignal, wenn die Informationen nicht übereinstimmen, wobei sich das zweite Anzeigesignal von dem ersten Anzeigesignal unterscheidet; und
bestimmen, ob zusätzliche Informationen, die in dem optischen Etikett eingeschlossen sind, zu dem Speicher des RFID-Etiketts hinzugefügt werden müssen.

10. Vorrichtung gemäß Anspruch 9, welche ferner eine Gegenstütze, die so ausgebildet ist, dass sie das biologische oder pharmazeutische Produkt hält, und einen Bewegungssensor umfasst, der so ausgebildet ist, dass er erkennt, wenn das biologische oder pharmazeutische Produkt auf der Gegenstütze platziert ist.

11. Vorrichtung gemäß Anspruch 9 oder 10, wobei das erste Anzeigesignal ein optisches und/oder ein akustisches Signal ist und das zweite Anzeigesignal ein optisches und/oder ein akustisches Signal ist.

## Revendications

1. Une méthode pour le monitorage et l'étiquetage de produits biologiques et pharmaceutiques, la méthode comportant :
lire au moins une étiquette optique attachée à un produit biologique ou pharmaceutique par le biais d'un dispositif comprenant un lecteur optique ayant des capacités de vision par ordinateur, la au moins une étiquette optique comprenant des informations sur le produit biologique ou pharmaceutique ;
lire une étiquette RFID attachée au produit biologique ou pharmaceutique par le biais d'un lecteur RFID du dispositif, l'étiquette RFID stockant dans une mémoire de celui-ci au moins un unique identifiant ou au moins un unique identifiant et des informations du produit biologique ou pharmaceutique ;
où les informations comprises dans l'étiquette optique et l'étiquette RFID comprennent un ou plusieurs de : nom du patient, type de sang, dossier médical, informations du produit, dosage, données de traçabilité, prescription, données de contrôle du produit ou une de leurs combinaisons, et
où la lecture d'au moins une étiquette optique et de l'étiquette RFID est effectuée simultanément ;
comparer, par un processeur, les informations lues des étiquettes optique et RFID ;
déterminer que les informations comparées, totalement ou partiellement, coïncident ou non sur la base du résultat de la comparaison ;
émettre un premier signal d'indication si les informations coïncident ou un deuxième signal d'indication si les informations ne coïncident pas, le deuxième signal d'indication étant différent du premier signal d'indication ; et
déterminer, par le processeur, si les informations complémentaires comprises dans l'étiquette optique doivent être ajoutées à la mémoire de l'étiquette RFID.

2. La méthode de la revendication 1, comportant en outre :
comparer, par le processeur, les informations de l'étiquette RFID avec les informations stockées dans une mémoire d'un système informatique ; et
déterminer si les informations stockées dans la mémoire du système informatique doivent être ajoutées à la mémoire de l'étiquette RFID sur la base du résultat de cette comparaison.

3. La méthode d'une quelconque des revendications précédentes, où la méthode est mise en œuvre simultanément durant l'étiquetage du produit biologique ou pharmaceutique.

4. La méthode d'une quelconque des revendications précédentes, où l'étiquette optique comporte un code-barres, une matrice de données ou un pictogramme.

5. La méthode de la revendication 1, où le premier signal d'indication est un signal optique et/ou acoustique et le deuxième signal d'indication est un signal optique et/ou acoustique.

6. Un système pour le monitorage et étiquetage de produits biologiques et pharmaceutiques , comportant :
- un dispositif comprenant un lecteur optique ayant des capacités de vision par ordinateur et un lecteur RFID, ce dispositif étant configuré pour :
lire au moins une étiquette optique attachée à un produit par le biais d'un lecteur optique ; et
lire une étiquette RFID attachée à un produit par le biais du lecteur RFID, l'étiquette RFID stockant dans une mémoire de celui-ci au moins un identifiant unique ;
**caractérisé en ce que** :
- le produit est un produit biologique ou pharmaceutique ;
- la au moins une étiquette optique comprend des informations sur le produit biologique ou pharmaceutique, où l'étiquette RFID en plus de l'identifiant unique peut aussi comprendre des informations du produit biologique ou pharmaceutique.
- la lecture d'au moins une étiquette optique et de l'étiquette RFID est configurée pour être effectuée simultanément ;
- les informations comprises dans l'étiquette optique et l'étiquette RFID comprennent un ou plusieurs de : nom du patient, type de sang, dossier médical, informations du produit, dosage, données de traçabilité, prescription, données de contrôle du produit ou une de leurs combinaisons ; et
- un système informatique fonctionnellement connecté au dispositif, ce système informatique comprenant une mémoire et au moins un processeur, où ce processeur est configuré pour :
comparer les informations lues des étiquettes optiques et RFID ;
déterminer que les informations comparées, totalement ou partiellement, coïncident ou non sur la base du résultat de la comparaison ;
émettre un premier signal d'indication si les informations coïncident ou un deuxième signal d'indication si les informations ne coïncident pas, le deuxième signal d'indication étant différent du premier signal d'indication ; et
déterminer si les informations complémentaires comprises dans l'étiquette optique doivent être ajoutées à la mémoire de l'étiquette RFID.

7. Le système de la revendication 6, où le dispositif comporte en outre un contre-appui configuré pour retenir le produit biologique ou pharmaceutique et un capteur de mouvement configuré pour détecter lorsque le produit biologique ou pharmaceutique est placé sur ce contre-appui.

8. Le système de la revendication 6, où le premier signal d'indication est un signal optique et/ou acoustique et le deuxième signal d'indication est un signal optique et/ou acoustique.

9. Un dispositif pour le monitorage et étiquetage de produits biologiques et pharmaceutiques, comportant :
- un lecteur optique ayant des capacités de vision par ordinateur configuré pour lire au moins une étiquette optique attachée à un produit ;
- un lecteur RFID configuré pour lire une étiquette RFID attachée à ce produit, l'étiquette RFID stockant dans une mémoire de celui-ci au moins un unique identifiant ; et
- une unité de traitement configurée pour comparer les informations lues provenant des étiquettes optiques et RFID ;
**caractérisé en ce que** :
- le produit est un produit biologique ou pharmaceutique ;
- la au moins une étiquette optique comprend des informations sur le produit biologique ou pharmaceutique, où l'étiquette RFID en plus de l'identifiant unique peut aussi comprendre des informations du produit biologique et pharmaceutique.
- la lecture d'au moins une étiquette optique et de l'étiquette RFID est configurée pour être effectuée simultanément ;
- les informations comprises dans l'étiquette optique et l'étiquette RFID comportent un ou plusieurs de : nom du patient, type de sang, dossier médical, informations du produit, dosage, données de traçabilité, prescription, données de contrôle du produit ou une de leurs combinaisons ;
- l'unité de traitement est en outre configurée pour :
déterminer que les informations comparées, totalement ou partiellement, coïncident ou non sur la base du résultat de la comparaison ;
émettre un premier signal d'indication si les informations coïncident ou un deuxième signal d'indication si les informations ne coïncident pas, le deuxième signal d'indication étant différent du premier signal d'indication ; et
déterminer si les informations complémentaires comprises dans l'étiquette optique doivent être ajoutées à la mémoire de l'étiquette RFID.

10. Le dispositif de la revendication 9 comportant en outre un contre-appui configuré pour retenir le produit biologique ou pharmaceutique et un capteur de mouvement configuré pour détecter lorsque le produit biologique ou pharmaceutique est placé sur ce contre-appui.

11. Le dispositif de la revendication 9 ou 10, où le premier signal d'indication est un signal optique et/ou acoustique et le deuxième signal d'indication est un signal optique et/ou acoustique.
